# EUROPEAN PATENT APPLICATION

(11) **EP 1 215 664 A1**
(43) Date of publication of application: **19.06.2002**
(21) Application number: 00403541.6
(22) Date of filing: 15.12.2000
(51) Int. Cl.: G11B 5/53, G11B 15/61

(54) **Head drum with dynamic gap adjustment**

(71) Applicant: Thomson Licensing S.A., 92648 Boulogne Cedex (FR)
(72) Inventor: Berthaud, Philippe, 89700 Tonnerre (FR); Perrot, Michel, 89700 Tonnerre (FR)
(74) Representative: Rossmanith, Manfred, Dr.

(57) **Abstract**

According to a first aspect the present invention is related to a head drum arrangement allowing a much easier gap adjustment of the rotary transformer. The head drum arrangement comprises a non-rotating lower drum and a rotating upper drum, which are connected by a shaft fixed in the lower drum. The upper drum is mounted on the shaft by a bearing and preferably by two ball bearings. A rotary transformer is arranged between the lower drum and the upper drum having a fixed stator and a rotor rotating jointly with the upper drum. The stator and the rotor are separated by an air gap. Finally, a compressible, elastic spring is arranged between the lower drum and the upper drum, such that the length of the spring defines the air gap between the stator and the rotor of the rotary transformer. Advantageously, the invention allows defining the air gap of the rotary transformer without requiring additional members like washers, spacers or something similar. The invention is also related to a magnetic tape recorder equipped with a head drum according to the first aspect of the invention.

Another aspect of the invention is related to an assembly method of a head drum arrangement according to a first aspect of the invention.

## Description

According to a first aspect the present invention relates to a head drum for magnetic tape apparatuses. The invention is based on a head drum according to the precharacterizing clause of Patent Claim 1. In the following text, a magnetic tape apparatus should be understood as meaning any apparatus in which signals, data or information in analogue and/or digital form are recorded on a magnetic tape and/or read from the latter. Independently of this, these apparatuses may also have other functions, e.g. they may be combined with an electronic camera. According to a second aspect the present invention additionally relates to a magnetic tape apparatus, which is equipped with an inventive head drum.

In general a head drum comprises a fixed lower drum and a rotating upper drum, carrying at least two read/write heads in a 180° configuration on its periphery. In operation, a magnetic tape is in contact with at least half of the circumference of the head drum. For the sake of simplicity in the following, the read/write heads will be referred to only as video heads reading signals from the tape. However, it is to be noted that the invention is not limited to reading video signals.

The rotating video heads read signals from the magnetic tape, which have to be transferred to the fixed lower drum, which is connected to signal processing circuitry. It is known to use brushes to transfer the signals between the rotating upper drum and the fixed lower drum. However, in practice the transferred signals are weak and the noise generated by the brushes tends to deteriorate the transferred signals. Furthermore, brushes are not reliable over long periods of time. Therefore, rotary transformers comprising a fixed stator and a rotating rotor are utilized to transmit signals from the rotating upper drum to the fixed lower drum are utilized in today's head drums. An air gap of 30-40 micrometers with an acceptable tolerance of about 10 micrometers separates the stator and the rotor of the rotary transformer. If these values of the air gap are not realized, the inductivity of the signal transmission path changes, leading to a perturbation of the transmitted signals. In the prior art it is therefore known to use a flywheel made of brass, machined to a predetermined thickness and mounted between upper and lower drum to define the preselected gap value. However, this solution involves a costly material as well as laborious and therefore expensive machining of the flywheel.

As an alternative JP-A-60124017 discloses an assembly process utilizing a spacer to adjust the gap of a rotary transformer in a head drum. The rotor of the transformer is fixed with cement on the shaft of the drum to adjust the gap of the transformer to be equal to the thickness of the spacer. When the cement is cured, the spacer is removed.

It is therefore desirable to provide a head drum arrangement allowing a much easier gap adjustment of the rotary transformer. According to the invention, a head drum arrangement is provided comprising a non-rotating lower drum and a rotating upper drum, which are connected by a shaft fixed in the lower drum. The upper drum is mounted on the shaft by a bearing and preferably by two ball bearings. A rotary transformer is arranged between the lower drum and the upper drum having a fixed stator and a rotor rotating jointly with the upper drum. The stator and the rotor are separated by an air gap. Finally, a compressible, elastic spring is arranged between the lower drum and the upper drum, such that the length of the spring defines the air gap between the stator and the rotor of the rotary transformer. Advantageously, the invention allows defining the air gap of the rotary transformer without requiring additional members like washers, spacers or something similar.

In a preferred embodiment of the invention, the spring is supported on its one end by a non-rotating ring of the bearing and on its other end by the stator of the rotary transformer. Usually, the bearing is a ball bearing and the inner ring of the bearing is fixed.

A further advantage of the inventive head drum arrangement is that the stator is pressed against the lower drum by the elastic force exerted by the spring onto the stator. In this way, the stator is non-positively connected to the lower drum without needing any additional securing means like screws or glue.

In another embodiment of the invention, the ball bearing is mounted on the shaft such that its inner ring slides on this shaft and the elastic force of the spring supplies a preload for the bearing. Hence, the spring has a second function and thereby further simplifying the structure of the inventive head drum arrangement is. Advantageously the dimensions of the spring are selected such that the spring applies a predetermined preload force onto the bearing or bearings when a predetermined value of the gap of the rotary transformer is adjusted.

According to a second aspect of the invention, a magnetic tape recorder is provided, equipped with a head drum arrangement according to the first aspect of the invention.

A third aspect of the invention is related to a method for adjusting the air gap of a rotary transformer, mounted in a head drum arrangement according to the first aspect of the invention. The inventive method comprises the following steps:
a) inserting the lower drum carrying the stator of the rotary transformer, such that the stator approaches the rotor of the rotary transformer whereby a spring arranged between the stator and the upper drum gets increasingly compressed;
b) dynamically measuring the gap between the stator and the rotor; and
c) stopping the insertion of the lower drum when a predetermined value of the gap is reached.

The invention can be better understood by reading the following description in connection with the accompanying drawing. In the drawing
Fig. 1 shows a head drum arrangement as it is known in the prior art and
Fig. 2 shows a head drum arrangement according to the invention.

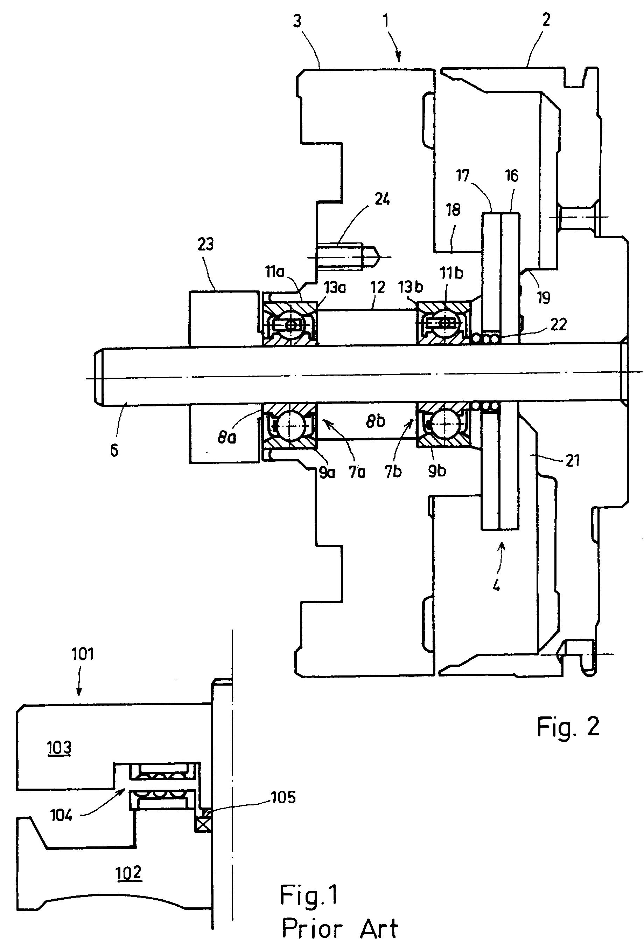

In Fig. 1 a conventional head drum arrangement 101 is shown in a partial and schematic view. The head drum 101 comprises a fixed lower drum 102 and a rotary upper drum 103. The rotary upper drum 103 carries magnetic read/write heads. The signals are transmitted between the upper drum 103 and the lower drum 102 by a rotary transformer 104. A washer 105 interposed between the upper drum and the lower drum defines the air gap between the static and the rotary part of the rotary transformer 104. In order to compensate for manufacturing tolerances of the members of the head drum the washer 105 is selected from a set of washers having different thicknesses. This involves the need to have a stock of washers at the manufacturing site, which is expensive because the washers are precision parts.

In Fig. 2 the reference number 1 refers to the head drum arrangement as a whole. The head drum 1 comprises a fixed or lower drum 2 and a rotating or upper drum 3. The upper drum 3 carries on its periphery a pair of read/write heads in a 180° configuration, which are not shown in Fig. 2. The head drum 1 can be adapted to accommodate a higher number of read/write heads, e.g. four or six heads depending on the concrete application of the head drum. The signals read by the read heads are transmitted from the rotating upper drum to the fixed lower drum via a rotary transformer 4 in a similar way the signals to be written by the write heads are transmitted by the rotary transformer 4 from the lower drum 2 to the upper drum 3. The lower drum 2 and the upper drum 3 are mounted on a shaft 6, which is fixed in the lower drum 2. The upper drum 3 is mounted on the shaft 6 by means of 2 ball bearings 7a, 7b, having both an inner ring 8a, 8b and an outer ring 9a, 9b. The outer rings 9a, 9b are accommodated in the upper drum 3 in circular seats 11a, 11b, which are connected by a bore 12, having a smaller diameter than the seats 11a, 11b. The bore 12 creates two ring shaped shoulders 13a, 13b serving as support or bearing for the outer rings 9a, 9b of the ball bearings.

The rotary transformer 4 includes a stator 16 and a rotor 17. The rotor 17 rests on a hub 18, which is one piece with the upper drum 3. The rotor 17 is secured on the hub 18 in a conventional way, e.g. by cement or by screws. The stator 16 rests on a hub 19, which is one piece with the lower drum 2. The hub 19 has a ring shape with a recess 21 to allow a cable, e.g. a Flexible Printed Cable (FPC) to connect the stator with signal processing circuits. Contrary to the rotor 17 the stator 16 is not securely fixed on the hub 19 but rather positively connected to it by a spring 22 compressed between the inner ring 8b of ball bearing 7b and the stator 16. Between the stator 16 and the rotor 17 there is a gap of 30 to 40 micrometers with a tolerance of ± 10 micrometers, which is not visible in Fig. 2. The value of the gap is determined by the length of the spring 22. The whole arrangement is securely held together by a disc or preload brass 23, which is fixed on the shaft 6. The upper drum is driven by a motor, which is not shown in Fig. 2. The rotor of the motor is drivingly connected to the upper drum by a screw to be fixed in a threaded hole 24. The length of spring 22 is adjusted by the amount the lower drum 2 is pressed onto the shaft 6, which will become apparent by reading the assembly procedure described in the following.

For the assembly of the head drum arrangement the disk 23 is fixed on the shaft 6. Then, the upper drum with ball bearings 7a, 7b, the rotor 17 of the rotary transformer 4 and the spring 22 are put on the shaft 6 as well. Finally, also the stator 16 to the rotary transformer 4 is also put on the shaft 6. Since the spring 22 is not compressed the stator is at a distance on the rotor, which is larger then the length of the gap of a completed head drum. For the assembly of the head drum the lower drum 2 is pressed on the shaft 6 and simultaneously the inductivity of the rotary transformer 4 is measured with an electronic device. The inductivity of the rotary transformer is directly related to the length of the air gap between the rotor 17 and the stator 16 and follows a known function. The insertion of the lower drum 2 is continued until a predetermined value for the gap is reached. The dimensions of the spring, i.e. length, wire thickness, diameter, type of wire and type of winding and other parameters, are calculated to apply a force of essentially 12 N in this position. It is possible to select other dimensions of the spring such that the spring applies a different preload force, smaller or larger than 12 N. In practice the length is preferred as adjustable parameter.

The insertion of the shaft into the lower drum 2 is preferably done in a fixture allowing to stop the insertion immediately upon reaching the predetermined value of the gap.

It is evident, that the invention is also applicable to other types of head drums, e.g. those having an upper drum, which is driven by a shaft.

## Claims

1. Head drum arrangement (1) comprising a non rotating lower drum (2) and a rotating upper drum (3) being connected by a shaft (6) fixed in the lower drum, wherein the upper drum is mounted on the shaft by a bearing (7a, 7b), wherein the arrangement further comprises a rotary transformer (4) having a fixed stator (16) and a rotor (17) rotating jointly with the upper drum, the stator and the rotor being separated by a gap **characterized in that**
a compressible spring (22) is arranged between the lower drum and the upper drum such that the length of the spring defines the gap between the stator and the rotor of the rotary transformer.

2. Head drum arrangement according to claim 1 **characterized in that** the spring (22) is supported on its one end by a non rotating ring (8b) of the bearing (7b) and on its other end by the stator (16) of the rotary transformer.

3. Head drum arrangement according to claim 1 **characterized in that** the stator (16) is non positively connected to the lower drum (2) by the elastic force exerted by the spring onto the stator.

4. Head drum arrangement according to claim 1 **characterized in that** the rotor (17) of the rotary transformer (4) is fixed onto the rotating upper drum (3).

5. Head drum arrangement according to claim 1 **characterized in that** the bearing (7a, 7b) is a ball bearing and the non rotating ring (8b) of the bearing is mounted to slide on the shaft (6) such that the elastic force of a spring (22) supplies a preload for the bearing.

6. Head drum arrangement according to claim 1 **characterized in that** the dimensions of the spring (22) applies a predetermined preload force when a predetermined value of the gap of the rotary transformer (4) is adjusted.

7. Magnetic tape recorder equipped with a drum arrangement according to one or several of claims 1 to 6.

8. Method for adjusting the gap of a rotary transformer mounted in a head drum arrangement according to claim 1 having a lower drum (2) and an upper drum (3), the method comprising following steps:
a) inserting the lower drum (2) carrying the stator (16) of the rotary transformer (4), such that the stator (16) approaches the rotor (17) of the rotary transformer whereby a spring (22) arranged between the stator and the upper drum gets increasingly compressed;
b) dynamically measuring the gap between the stator and the rotor; and
c) stopping the insertion of the lower drum when a predetermined value of the gap is reached.
